# EUROPÄISCHE PATENTANMELDUNG

(11) **EP 4 516 642 A1**
(43) Veröffentlichungstag der Anmeldung: **05.03.2025**
(21) Anmeldenummer: 24190870.6
(22) Anmeldetag: 25.07.2024
(51) Int. Cl.: B62D 21/18, B62D 33/063

(54) **ARBEITSFAHRZEUG MIT DREHVORRICHTUNG ZUM DREHEN EINER FAHRERKANZEL**

(30) Priorität: 17.08.2023 DE 102023122064
(71) Anmelder: Wacker Neuson Linz GmbH, 4063 Hörsching (AT)
(72) Erfinder: SCHAUER, Markus, 4160 Aigen (AT); MITTER, Raphael, 4074 Stroheim (AT)
(74) Vertreter: Müller Hoffmann & Partner

(57) **Zusammenfassung**

Es wird eine Drehvorrichtung zum Drehen einer Fahrerkanzel (39), mit einem drehbar gelagerten Drehgestell (17) zum Tragen der Fahrerkanzel (39); und mit einem Kettentrieb zum drehenden Antreiben des Drehgestells (17); wobei der Kettentrieb ein Ritzel (1), ein Kettenrad (2) und eine über das Ritzel (2) und das Kettenrad (2) wenigstens teilweise umlaufende Kette (3) aufweist; wobei das Kettenrad (2) an dem Drehgestell (17) ausgebildet ist; wobei die Kette (3) zwei Enden (10, 11) aufweist, die beide an dem Kettenrad (2) befestigt sind; wobei die Kette (3) zwischen ihren beiden Enden (10, 11) über das Ritzel (1) geführt wird; wobei das Ritzel (1) und das Kettenrad (2) jeweils eine Drehachse (4, 5) aufweisen; und wobei die beiden Drehachsen (4, 5) parallel zueinander verlaufen und relativ zueinander in einer Ebene senkrecht zu den Drehachsen (4, 5) bewegbar sind. Die Drehvorrichtung kann vorteilhaft bei einem Arbeitsfahrzeug eingesetzt werden.

## Beschreibung

Die Erfindung betrifft ein Arbeitsfahrzeug und eine Drehvorrichtung zum Drehen einer Fahrerkanzel des Arbeitsfahrzeugs. Ein derartiges Arbeitsfahrzeug kann insbesondere ein Lader, wie z.B. ein Dumper (Muldenkipper) oder ein Radlader sein.

Derartige Arbeitsfahrzeuge sind bekannt. Radlader mit besonderer Beweglichkeit nach dieser Bauart können einen Vorderwagen und einen Hinterwagen aufweisen, sowie ein zwischen dem Vorderwagen und dem Hinterwagen angeordnetes Gelenk zum Koppeln des Hinterwagens mit dem Vorderwagen, derart, dass der Vorderwagen und der Hinterwagen um wenigstens eine Hochachse des Arbeitsfahrzeugs relativ zueinander bewegbar sind. Da somit der Vorderwagen und der Hinterwagen relativ zueinander eine Art "Knickbewegung" machen können, wird in diesem Zusammenhang auch von knickgelenkten Radladern gesprochen. Das Knicken zwischen Vorderwagen und Hinterwagen ermöglicht eine Lenkbewegung und damit Kurvenfahrten, da die an Vorder- und Hinterwagen angeordneten Räder bzw. Radachsen in einen Winkel zueinander gestellt werden können.

Entsprechend sind auch sogenannte Dumper (knickgelenkte kleinere Muldenkipper) bekannt, bei denen eine Fahreinheit (Hinterwagen) mit einer Muldeneinheit (Vorderwagen) über ein Knickgelenk gekoppelt sind, um eine Knickbewegung und damit eine Lenkung zu ermöglichen.

Zur Verbesserung der Geländegängigkeit ist es darüber hinaus bekannt, das Gelenk derart auszubilden, dass es auch eine Relativbewegung zwischen Vorderwagen und Hinterwagen bzw. Fahreinheit und Muldeneinheit um die Längsachse des Arbeitsfahrzeugs zulässt. Diese Relativbewegung wird auch als "Pendeln" bezeichnet. Ein derart kombiniertes Gelenk wird dementsprechend auch als "Knick-Pendel-Gelenk" benannt. Ein Knick-Pendel-Gelenk ist zum Beispiel aus der DE 101 30 530 C1 oder der EP 2 218 835 A1 bekannt.

Bei Dumpern ist auf der Muldeneinheit eine relativ zu dem Fahrgestell der Muldeneinheit nach oben verschwenkbare Mulde vorgesehen, die z.B. zur Aufnahme von losen Schüttgütern, Erde, Geröll etc. dient.

Zum Bedienen der Mulde ist es für den Fahrer des Dumpers zweckmäßig und bequem, wenn er die Mulde direkt von seinem Fahrersitz aus im Blick hat. Diese Blickrichtung kann hingegen beim Verfahren des Dumpers unkomfortabel sein, weil sich die Mulde dann vor dem Fahrer in Fahrtrichtung befindet und so das Sichtfeld einschränkt.

Zur Lösung dieses Problems wird in der EP 3 211 141 A1 ein knickgelenkter Muldenkipper mit drehbarem Fahrersitz angegeben. Dabei ist an der Fahreinheit des Muldenkippers eine Drehkonsole vorgesehen, die einen Fahrersitz trägt und die relativ zu der restlichen Fahreinheit um eine Hochachse zwischen einer Vorwärtsstellung und einer Rückwärtsstellung verschwenkbar ist.

Die Verschwenkung kann manuell vom Benutzer durchgeführt werden, indem er händisch die Drehkonsole zwischen Vorwärts- und Rückwärtsstellung verdreht.

Alternativ sind aber auch motorische Antriebe bekannt, mit deren Hilfe die Verdrehung einer den Fahrersitz tragenden Drehkonsole erfolgen kann. Ein Beispiel ist in der EP 2 374 654 B1 beschrieben, bei dem eine Verdrehung mit Hilfe eines Zahnradgetriebes erfolgt.

Ein anderes Beispiel für einen Drehantrieb nutzt einen Kettentrieb, bei dem eine Kette über ein Antriebsritzel und ein Kettenrad bewegt wird und so die Drehkonsole verdreht. Hier stellt sich aber das Problem, dass bei einem Kettentrieb die Kette gespannt werden muss, um Maßänderungen der Kette im Betrieb, insbesondere durch Längung und Verschleiß, zu kompensieren. Dazu sind Kettenspanner bekannt, die jedoch nur in einer Drehrichtung funktionieren. Dabei stehen Kettenrad und Ritzel in einem fixen Abstand zueinander, wobei die während der Laufzeit auftretende Kettenlängung auf der "durchhängenden" Seite des Kettentriebs (Leertrum) durch eine federbelastete Gleitschiene und ein Laufrad kompensiert wird.

Diese Lösung ist jedoch nur für eine Drehrichtung geeignet. Bei einem Wechsel der Drehrichtung strafft sich die bisher durchhängende Seite (Leertrum), während sich die bisher straffe Seite (Lasttrum) lockert. Dadurch resultiert eine ungewollte Winkelverdrehung zwischen Kettenrad und (Antriebs-)Ritzel bei einem Richtungswechsel. Dadurch kann nicht die gewünschte Präzision für das Drehverstellen eines Fahrersitzes erreicht werden.

Der Erfindung liegt die Aufgabe zugrunde, eine Drehvorrichtung zum Drehen einer Fahrerkanzel anzugeben, bei der ein Antriebsritzel und ein von dem Antriebsritzel über eine Kette angetriebenes Kettenrad immer in gleicher Verdrehung zueinanderstehen, wobei der Verschleiß sowie Fertigungs- und Montagetoleranzen im Betrieb ausgeglichen werden sollen.

Die Aufgabe wird erfindungsgemäß durch eine Drehvorrichtung zum Drehen einer Fahrerkanzel mit den Merkmalen von Anspruch 1 gelöst. Vorteilhafte Ausgestaltungen sind den abhängigen Ansprüchen zu entnehmen. Die erfindungsgemäße Drehvorrichtung kann vorteilhaft bei einem Arbeitsfahrzeug, insbesondere bei einem knickgelenkten Arbeitsfahrzeug, eingesetzt werden.

Es wird eine Drehvorrichtung zum Drehen einer Fahrerkanzel angegeben, mit einem drehbar gelagerten Drehgestell (Drehkonsole) zum Tragen einer Fahrerkanzel; mit einem Kettentrieb zum drehenden Antreiben des Drehgestells; und mit einer Kettenspanneinrichtung, wobei der Kettentrieb ein Ritzel, ein Kettenrad und eine über das Ritzel und das Kettenrad wenigstens teilweise umlaufende Kette aufweist; wobei das Kettenrad an dem Drehgestell angeordnet ist; wobei das Ritzel und das Kettenrad jeweils eine Drehachse aufweisen; und wobei die beiden Drehachsen parallel zueinander verlaufen und relativ zueinander in einer Ebene senkrecht zu den Drehachsen bewegbar sind.

Die Fahrerkanzel kann dabei insbesondere den Fahrersitz aufweisen, gegebenenfalls auch weitere Komponenten wie z.B. Bedienelemente (Lenkrad, Armaturenträger, Bedienpedale etc.), eine den Fahrersitz schützend umschließende Fahrerkabine etc. Die Fahrerkanzel sollte zwischen wenigstens zwei Stellungen, nämlich einer Stellung für Vorwärtsfahrt (Vorwärtsstellung) und einer Stellung für Rückwärtsfahrt (Rückwärtsstellung) drehbar sein.

Die Bezeichnung Kettentrieb ist als Oberbegriff zu verstehen. Insbesondere kann der Kettentrieb auch als Riementrieb, Bandtrieb oder Seiltrieb verstanden werden. Dementsprechend kann der Kettentrieb eine Kette aufweisen, die eine Kette im Wortsinn ist und entsprechende Kettenglieder aufweist, oder auch ein Band, ein Riemen oder ein Seil. Die Begriffe Kettentrieb oder Kette werden somit als Oberbegriffe für verschiedene bandartige Antriebe verwendet, um die Lesbarkeit des Textes zu erhöhen.

Dementsprechend können auch das Ritzel und das Kettenrad ausgebildet sein, um z.B. einen Riemen, insbesondere einen Zahnriemen, zu führen und anzutreiben.

Das Ritzel kann ein Antriebsritzel sein, das durch einen Motor, z.B. einen Elektromotor oder einen hydraulischen Motor, angetrieben werden kann.

Erfindungsgemäß sind die Drehachsen relativ zueinander bewegbar. Insbesondere kann eine der Drehachsen feststehen, d.h. ortsfest angeordnet sein, aber drehbar bleiben, während die andere Drehachse relativ dazu bewegbar sein kann. Die Drehachsen sollten dabei parallel zueinander stehen und parallel zueinander bewegt werden können (Parallelverschiebung).

Die relative Beweglichkeit der beiden Drehachsen zueinander kann Teil einer Kettenspanneinrichtung sein, die später noch erläutert wird.

Die Kette (gleichbedeutend mit einer Kette im engeren Sinne oder einem Riemen oder einem Band oder einem Seil) kann über das Ritzel und das Kettenrad wenigstens teilweise umlaufen. Das bedeutet, dass die Kette geschlossen sein kann, aber nicht muss. Vielmehr kann auch eine offene Kette mit offenen Kettenenden geeignet sein.

Die Kette kann dabei mit dem Kettenrad zur Übertragung eines Drehmoments in geeigneter Weise in Eingriff stehen. Der Eingriff kann form- oder reibschlüssig erfolgen. Er kann auch dadurch erreicht werden, dass lediglich Enden der Kette an dem Kettenrad befestigt sind, so dass die Kette eine Zugwirkung auf das Kettenrad ausübt, um das Drehmoment zu erzeugen.

Die beiden Drehachsen können relativ zueinander derart bewegbar sein, dass ihr Abstand veränderbar ist. Durch die Veränderbarkeit des Abstands der Drehachsen wird erreicht, dass Längung der Kette oder andere Toleranzen im Betrieb ausgeglichen werden können. Die Kette kann stets gespannt sein, so dass Toleranzen ausgeglichen werden.

Der Abstand der beiden Drehachsen kann unter Wirkung einer Federeinrichtung veränderbar sein, wobei die Wirkung der Federeinrichtung derart sein kann, dass die Federeinrichtung ein Vergrößern des Abstands bewirkt. Dementsprechend kann der Abstand der beiden Drehachsen zueinander durch die Federeinrichtung vorgespannt sein. Der Abstand kann zwar gegen die Wirkung der Federeinrichtung verringert werden; die Federeinrichtung ihrerseits drückt aber die Drehachsen auseinander und versucht, den Abstand der Drehachsen zueinander zu vergrößern. Dadurch wird die Kette gespannt und immer auf Spannung gehalten.

Eine der Drehachsen kann auf einer Konsole gelagert sein, wobei die Konsole beweglich an einer Konsolenlagerung gelagert sein kann, und wobei die Federeinrichtung eine Federkraft auf die Konsole bewirken kann, derart, dass die Konsole an der Konsolenlagerung bewegt wird und der Abstand der beiden Drehachsen vergrößert wird.

Insbesondere kann die Konsole schwenkbar an der Konsolenlagerung gelagert sein, wobei die Federeinrichtung eine Federkraft auf die Konsole bewirkt, derart, dass die Konsole um die Konsolenlagerung verschwenkt wird.

Bei einer Ausführungsform kann die Drehachse des Kettenrads ortsfest stehen, während die Drehachse des Ritzels auf der Konsole gelagert sein kann. Damit kann die Drehachse des Ritzels auf der Konsole schwenkbar an der Konsolenlagerung gelagert sein.

Bei diesem Aufbau wird eine Kettenspanneinrichtung verwirklicht, die die Konsole, die Konsolenlagerung und die Federeinrichtung aufweist, In Zusammenwirkung von Federeinrichtung, beweglicher bzw. insbesondere verschwenkbarer Konsole und Konsolenlagerung wird erreicht, dass die Kette unter Spannung gehalten wird.

Das Kettenrad und das Drehgestell können eine Einheit bilden. Zum Beispiel ist es möglich, dass das Kettenrad und das Drehgestell aus einem Teil, also einstückig, hergestellt sind. Alternativ ist es möglich, Kettenrad und Drehgestell aus mehreren Komponenten zusammen zu montieren.

Die Kette kann eine geschlossene bzw. endlose Kette sein.

Bei einer Variante kann die Kette zwei Enden aufweisen, die beide an dem Kettenrad befestigt sind, wobei die Kette zwischen ihren beiden Enden über das Ritzel geführt wird.

Die Kette kann insbesondere eine nicht geschlossene Kette sein, wobei die beiden Enden der Kette an dem Kettenrad befestigt sind und sich das Kettenrad über einen zwischen den beiden Enden liegenden Umfang von wenigstens 180° erstreckt. Dies ermöglicht einen Umschlingungswinkel der Kette von mehr als 180°, wodurch ein Verdrehen des Drehgestells um 180°, nämlich insbesondere in Vorwärts- und Rückwärtsrichtung, ermöglicht wird.

Das Kettenrad kann sich über einen Umfang von weniger als 360° erstrecken. Dadurch ist es möglich, das Kettenrad zu segmentieren, sodass das Kettenrad nur in dem Bereich bereitgestellt wird, der durch die Kette zum Erreichen der Vorwärts- und der Rückwärtsstellung genutzt wird. Das Kettenrad muss somit nicht einen geschlossenen Kreis ausfüllen, sondern lediglich den Bereich, der am Umfang von der Kette umschlungen wird. In diesem Fall kann der Umschlingungswinkel kleiner als 360° sein.

Das Kettenrad kann eine Verzahnung aufweisen, die in die Kette eingreift. Bei einer Variante kann das Kettenrad auch keine Verzahnung aufweisen, in die die Kette eingreifen könnte. In diesem Fall kann die Kette lediglich an ihren Enden an dem Kettenrad befestigt sein.

Bei der erstgenannten Variante, bei der das Kettenrad in die Kette eingreift, ist die Kette auch über die Verzahnung an dem Kettenrad befestigt. Die Verzahnung bewirkt einen Formschluss zwischen Kette und Kettenrad.

Bei der zweiten Variante liegt die Kette hingegen nur am Umfang des Kettenrads an. Eine formschlüssige Verbindung ist in diesem Fall nicht gegeben. Die Befestigung erfolgt lediglich an den Kettenenden, nicht aber dazwischen.

Es können zwei Endanschläge vorgesehen sein, zum Definieren von zwei End-Drehstellungen des Drehgestells. Die End-Drehstellungen können Ziel-Drehstellungen sein, die beim Drehen der Fahrerkanzel erreicht werden sollen. Insbesondere können die beiden End-Drehstellungen um 180° versetzt sein und der Vorwärts- und Rückwärtsrichtung entsprechen.

Die beiden Endanschläge können mit einem Träger der Drehvorrichtung zusammenwirken, der für die Endanschläge jeweils entsprechende Gegenanschläge vorsieht, so dass sich ein jeweiliger Endanschlag an einem jeweils zugeordneten Gegenanschlag abstützen kann. Der Träger kann insbesondere an einem Fahrzeug, z.B. einem Arbeitsfahrzeug ausgebildet sein und z.B. einen Teil eines Fahrwerks des Fahrzeugs bilden.

Die Endanschläge können an dem Kettenrad ausgebildet sein und z.B. einen Gummipuffer für einen weichen Anschlag bzw. eine Anschlagsdämpfung aufweisen.

Es kann wenigstens ein Endschalter vorgesehen sein, zum Erkennen einer Drehstellung des Drehgestells, wenn das Drehgestell bei einem Drehvorgang eine der beiden End-Drehstellungen erreicht hat. Insbesondere können dabei zwei Endschalter vorgesehen sein, nämlich jeweils ein Endschalter für eine der beiden End-Drehstellungen. Damit kann insbesondere das Erreichen einer jeweiligen End-Drehstellung durch das Drehgestell erkannt werden.

Die Endschalter können mit einer Kulisse ausgestattet sein, die mit einem jeweiligen Taster oder Schalter zusammenwirken.

Die Endschalter können auch mit den jeweiligen Endanschlägen gekoppelt sein, sodass ein Erreichen eines Endanschlags auch einen jeweiligen Endschalter betätigt.

Wenn der Endschalter erkannt hat, dass das Drehgestell die dem Endschalter zugeordnete End-Drehstellung erreicht hat, kann der Endschalter eine Unterbrechung des Antriebs des Ritzels herbeiführen, sodass keine weitere Drehung des Drehgestells erfolgt.

Bei einer Weiterentwicklung kann wenigstens ein Vorschalt-Endschalter vorgesehen sein, zum Erkennen einer Drehstellung des Drehgestells in einem vordefinierten Bereich, bevor das Drehgestell bei einem Drehvorgang eine der beiden End-Drehstellungen erreicht hat. Dabei kann das Ritzel durch einen Antriebsmotor antreibbar sein, wobei der Antriebsmotor mit einer Nenndrehzahl und einer gegenüber der Nenndrehzahl reduzierten Näherungsdrehzahl betreibbar ist, und wobei der Antriebsmotor mit der reduzierten Näherungsdrehzahl betrieben wird, wenn der Vorschalt-Endschalter die Drehstellung des Drehgestells in einem vordefinierten Bereich erkannt hat.

Auf diese Weise kann eine so genannte "Softstopp"-Funktion erreicht werden. Die Drehgeschwindigkeit des Drehgestells kann bei Annäherung an die End-Drehstellung kurz vor Erreichen der End-Drehstellung vermindert werden, indem die Drehzahl des Antriebsmotors von Nenndrehzahl auf Näherungsdrehzahl reduziert wird. Das Drehgestell nähert sich dann sanft seiner End-Drehstellung an, so dass ein harter Anschlag vermieden wird.

Sinnvoll ist es, den Bereich vor Erreichen der End-Drehstellung zu definieren. Insbesondere sollte dieser Bereich direkt vor Erreichen der End-Drehstellung liegen und z.B. die letzten 10° oder 5° vor Erreichen der End-Drehstellung umfassen.

Die beschriebene Drehvorrichtung kann insbesondere vorteilhaft bei einem Arbeitsfahrzeug, wie einem Lader, also einem Dumper oder einem Radlader eingesetzt werden.

Es wird ein Arbeitsfahrzeug angegeben, mit einer Fahreinheit, die einen Antrieb und einen Fahrersitz bzw. eine Fahrerkanzel aufweist; und mit einer Muldeneinheit, die eine Mulde zum Aufnehmen einer Last aufweist; wobei an der Fahreinheit ein Drehgestell bzw. eine Drehkonsole vorgesehen ist, über der der Fahrersitz bzw. die Fahrerkanzel angeordnet ist und die relativ zu der restlichen Fahreinheit um eine Hochachse zwischen einer Vorwärtsstellung und einer Rückwärtsstellung verschwenkbar ist. Das Drehgestell bzw. die Drehkonsole kann durch eine Drehvorrichtung der oben beschriebenen Art verdreht werden.

Das Arbeitsfahrzeug kann zwei starre Achsen aufweisen, die an einem Rahmen montiert sind. Dabei ist ein Pendeln der Achsen nicht möglich. Bei dem Arbeitsfahrzeug kann eine Achsschenkellenkung vorgesehen sein.

Der Rahmen selbst kann ein Pendelgelenk aufweisen.

Bei einer Variante kann das Arbeitsfahrzeug mit einem zwischen der Fahreinheit und der Muldeneinheit angeordneten Gelenk zum Koppeln der Fahreinheit mit der Muldeneinheit ausgebildet sein, derart, dass die Fahreinheit und die Muldeneinheit um wenigstens eine Hochachse des Arbeitsfahrzeugs relativ zueinander bewegbar sind;

Das Arbeitsfahrzeug kann ein oben bereits erläutertes "Knick-Pendel-Gelenk" aufweisen. Ein Knick-Pendel-Gelenk ist zum Beispiel aus der DE 101 30 530 C1 oder der EP 2 218 835 A1 bekannt. Der Aufbau eines Knick-Pendel-Gelenks ist insbesondere in der EP 2 218 835 A1 detailliert beschrieben, so dass sich an dieser Stelle eine Beschreibung im Einzelnen erübrigt.

Diese und weitere Vorteile und Merkmale werden nachfolgend anhand von Beispielen unter Zuhilfenahme der begleitenden Figuren näher erläutert. Es zeigen:
- **Fig. 1**: in schematischer Draufsicht eine erfindungsgemäße Drehvorrichtung zum Drehen einer Fahrerkanzel;
- **Fig. 2**: ein konkretes Beispiel für die erfindungsgemäße Drehvorrichtung in der Draufsicht;
- **Fig. 3**: eine Ausschnittsvergrößerung zu Fig. 2;
- **Fig. 4**: einen Endanschlag in schematischer Darstellung;
- **Fig. 5**: eine Ausschnittsvergrößerung zu Fig. 2 mit Darstellung eines Endanschlags;
- **Fig. 6**: die Drehvorrichtung von Fig. 1 mit Darstellung möglicher Sensorpositionen;
- **Fig. 7**: ein Drehgestell mit Kulisse für eine "Softstopp"-Funktion; und
- **Fig. 8**: ein Beispiel für ein Arbeitsfahrzeug.

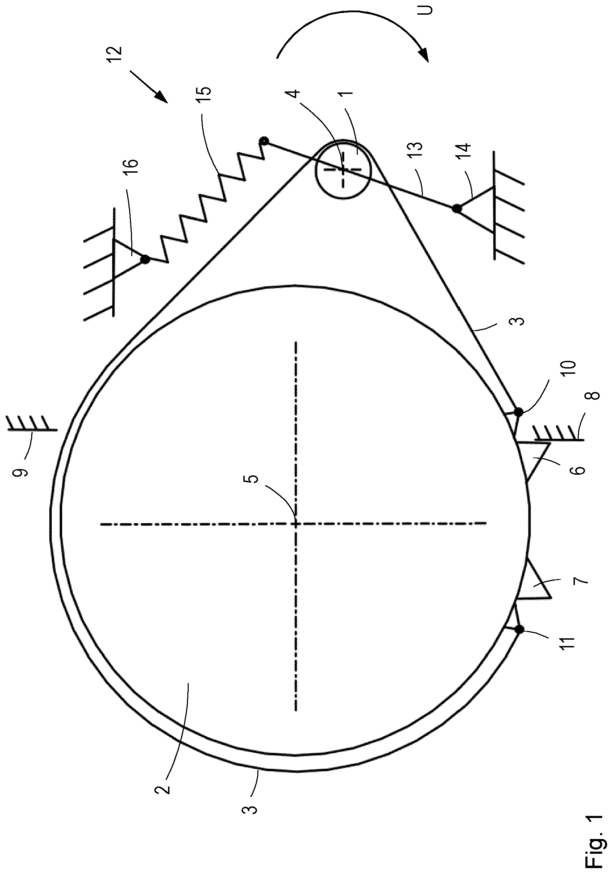

Fig. 1 zeigt in schematischer Draufsicht ein Beispiel für eine erfindungsgemäße Drehvorrichtung.

Die Drehvorrichtung weist ein als Antrieb dienendes Ritzel 1 und ein Kettenrad 2 auf, um die eine Kette 3 umläuft. Das Ritzel 1 weist eine Ritzeldrehachse 4 und das Kettenrad 3 eine Kettenraddrehachse 5 auf.

Das Ritzel 1 kann durch einen nicht dargestellten Motor, insbesondere einen Elektromotor, in beide Drehrichtungen drehend angetrieben werden. Je nach Drehrichtung überträgt die am Ritzel 1 umlaufende Kette 3 die Drehbewegung auf das sich um die Kettenraddrehachse 5 drehende Kettenrad 2.

Das Kettenrad 2 kann eine nicht dargestellte Fahrerkanzel mit einem Fahrersitz tragen, der ebenfalls mit dem Kettenrad 2 verdreht wird.

Insbesondere kann das Kettenrad um 180° verdreht werden. Bei der in Fig. 1 gezeigten Stellung des Kettenrads 2 sind zwei Endanschläge 6, 7 vorgesehen, die mit Gegenanschlägen 8, 9 zusammenwirken können. So ist in Fig. 1 eine Situation gezeigt, in der der Endanschlag 6 gegen den Gegenanschlag 8 anschlägt. Wenn das Kettenrad 2 um 180° gedreht wird, schlägt der Endanschlag 7 an den Gegenanschlag 9. Die Gegenanschläge 8, 9 können z.B. an einem Fahrgestell eines den Drehantrieb aufweisenden Arbeitsfahrzeugs vorgesehen sein.

Die Kette 3 weist Kettenenden 10, 11 auf, an denen die Kette 3 an dem Kettenrad 2 befestigt ist. Insbesondere läuft die Kette 3 in der in Fig. 1 gezeigten Situation vom Kettenende 11 am Umfang über mehr als 180° außen an dem Kettenrad 2 entlang, bevor die Kette 3 sich weiter in Richtung des Ritzels 1 erstreckt und dort umläuft. Am Umfang des Kettenrads 2 kann eine nicht dargestellte Verzahnung vorgesehen sein, die in die Kette 3 eingreift. Bei einer alternativen Variante ist es möglich, dass die Kette 3 lediglich am Außenumfang des Kettenrads 2 anliegt, aber dort nicht mit einer Verzahnung zusammenwirkt. Die Kette 3 wird dann vom Kettenende 11 über den Umfang des Kettenrads 2 gezogen, wenn das Ritzel 1 im Uhrzeigersinn U drehend angetrieben wird.

Es ist eine Kettenspanneinrichtung 12 vorgesehen, mit der die Kette 3 sowohl auf der - von der jeweiligen Drehrichtung abhängigen - jeweiligen Lastrumseite als auch auf der jeweiligen Leertrumseite unter Spannung gehalten wird. Zu diesem Zweck weist die Kettenspanneinrichtung 12 eine Konsole 13 auf, die an einer Konsolenlagerung 14 schwenkbar gelagert ist. Die Konsolenlagerung 14 kann an dem Arbeitsfahrzeug abgestützt sein.

Die Konsole 13 trägt das Ritzel 1 drehbar beweglich und wird durch die Kraft einer Feder 15 beaufschlagt. Die Feder 15 ist eine Druckfeder und bewirkt, dass die Konsole 13 und damit auch das Ritzel 1 mit der Ritzeldrehachse 4 weg von dem Kettenrad 2 und der Kettenraddrehachse 5 bewegt wird, in Fig. 1 nach rechts. Die Feder 15 stützt sich dabei gegen eine Federlagerung 16, die an dem Arbeitsfahrzeug vorgesehen sein kann.

Auf diese Weise wird die über die das Ritzel 1 und das Kettenrad 2 umlaufende Kette 3 permanent unter Spannung gehalten.

Die Kettenspanneinrichtung 12 ermöglicht ein Montieren der Kette, indem die Konsole 13 gegen die Wirkung der Feder 15 gedrückt wird, um die Kette 3 zu lösen. Zudem dient die Kettenspanneinrichtung 12 zum Ausgleichen von einer Ovalität des Drehgestells bzw. Kettenrads 2 und einer Längenänderung durch einen Verschleiß der Kette 3. Die Konsole 13 wird über die Feder 15 immer gespannt, sodass kein manuelles Nachspannen erforderlich ist.

Schläge, die während der Drehbewegung auftreten könnten, werden durch die Feder 15 gedämpft. Dies betrifft vor allem auch das Erreichen der Endstellungen, in denen die Endanschläge 6, 7 gegen die jeweiligen Gegenanschläge 8, 9 anschlagen.

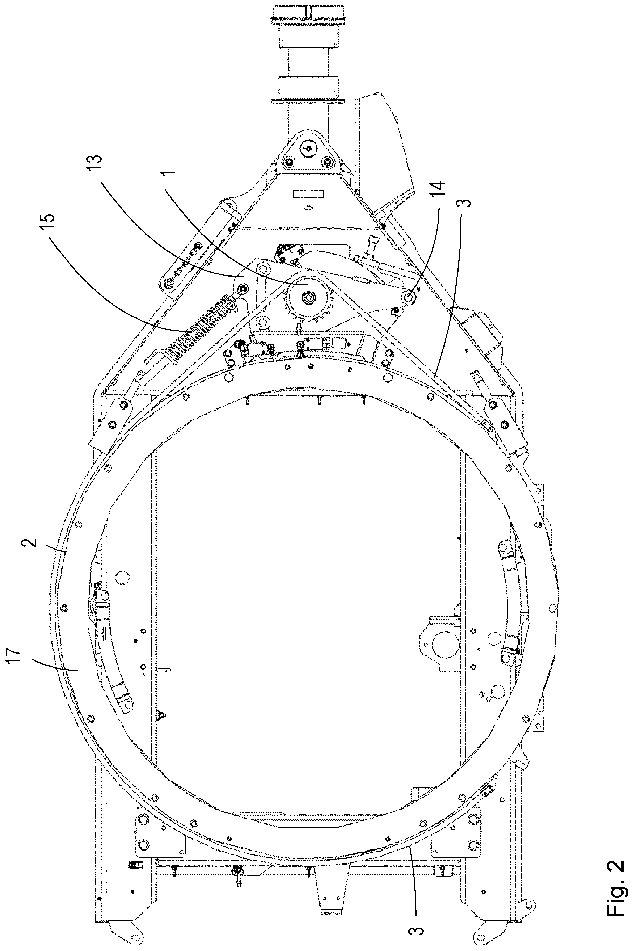

Fig. 2 zeigt eine konkrete Ausführungsform der schematischen Darstellung von Fig. 1 in der Draufsicht. Zur Vermeidung von Wiederholungen werden die gleichen Bezugszeichen verwendet, sodass auch auf die obige Beschreibung von Fig. 1 Bezug genommen werden kann.

Gut erkennbar ist, dass das Kettenrad 2 Teil eines Drehgestells 17 ist, auf dem die Fahrerkanzel, insbesondere der nicht dargestellte Fahrersitz, dargestellt werden kann.

Das Arbeitsfahrzeug wird bei der in Fig. 2 gezeigten Ausführungsform von einem nicht dargestellten Fahrzeugmotor angetrieben, der unterhalb des Drehgestells 17 angeordnet ist bzw. sich nach unten erstreckt. Der Fahrzeugmotor kann unterhalb der schwenkbaren Konsole 13 angeordnet sein. Der Fahrzeugmotor kann ein Verbrennungsmotor oder ein Elektromotor sein. Der Fahrzeugmotor kann einen hydraulischen Antrieb antreiben, der z.B. die Fahrfunktionen und/oder Arbeitsfunktionen eines den Drehantrieb tragenden Arbeitsfahrzeugs versorgt. Der Fahrzeugmotor kann auch den Drehantrieb antreiben, z.B. über einen Hydraulikantrieb.

Durch den "tiefen" Einbau des Fahrzeugmotors ist es möglich, dass keine Komponenten des Fahrzeugmotors bzw. Antriebs außerhalb des Umfangs des Drehgestells 17 nach oben über dieses hinaus überstehen. Innerhalb des Umfangs des Drehgestells 17 ist es hingegen möglich bzw. denkbar, dass Antriebselemente nach oben hindurchragen.

Damit ist es möglich, dass eine auf dem Drehgestell 17 aufgebaute bzw. oberhalb des Drehgestells 17 angeordnete Fahrerkanzel (z.B. Fahrerkabine) auf einer flachen bzw. ebenen Plattform einer Maschine (Arbeitsfahrzeug) aufsitzen kann.

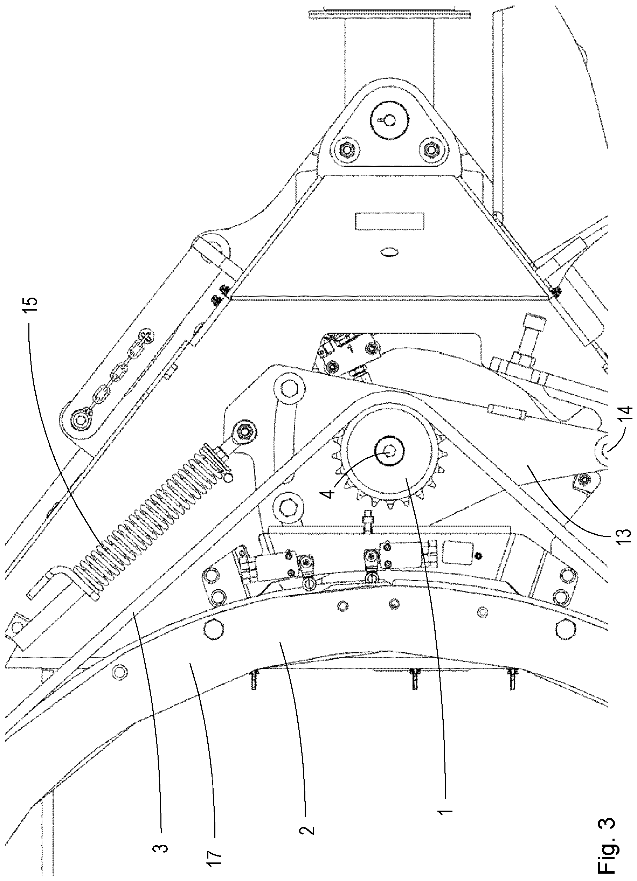

Fig. 3 zeigt eine Ausschnittsvergrößerung mit den oben erläuterten wesentlichen Komponenten. Dabei ist gut erkennbar, wie die als Druckfeder dienende Feder 15 gegen die Konsole 13 drückt, um die Konsole 13 mit dem Ritzel 1 um die Konsolenlagerung 14 nach rechts zu verschwenken, so dass die Kette 3 gespannt wird.

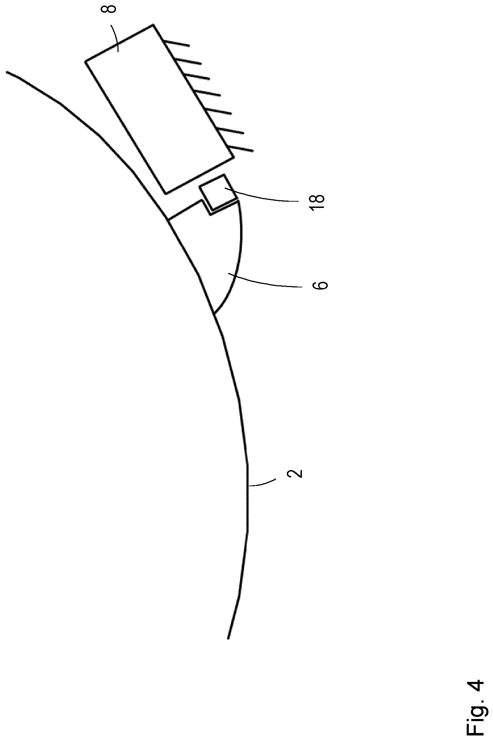

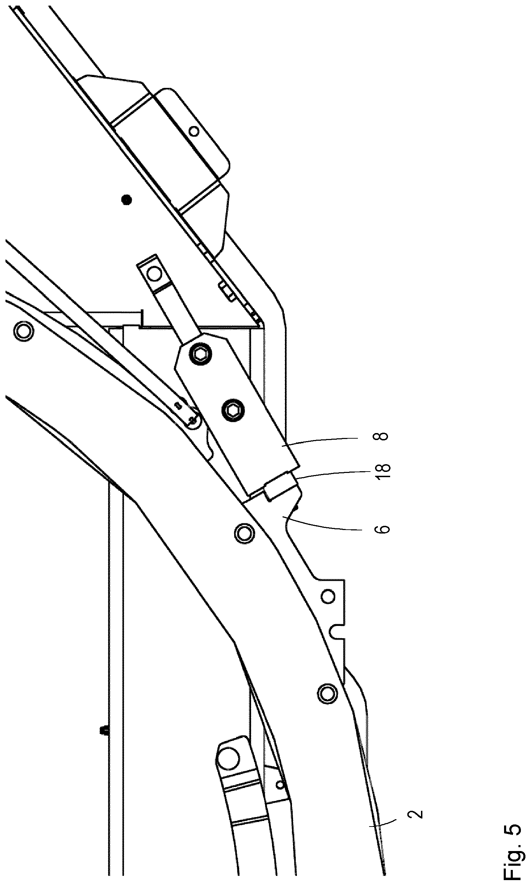

Fig. 4 zeigt schematisch ein Beispiel für den Endanschlag 6. Fig. 5 zeigt dazu eine Ausschnittsvergrößerung von Fig. 2, ebenfalls mit dem Endanschlag 6.

Der Endanschlag 6 ist an dem Kettenrad 2 angebracht, wie auch in Fig. 1 gezeigt. Er weist zusätzlich ein Dämpfungselement 18 auf, z.B. einen Gummipuffer, um die Wirkung des Anschlags selbst zu dämpfen. Dem Endanschlag 6 gegenüber ist der Gegenanschlag 8 positioniert, so dass der Endanschlag 6 bei einem Auftreffen auf den Gegenanschlag 8 mit dem Dämpfungselement 18 auftrifft, um einen weichen Kontakt zu ermöglichen. Der Gegenanschlag 8 kann an dem nicht dargestellten Fahrgestell des Arbeitsfahrzeugs abgestützt sein.

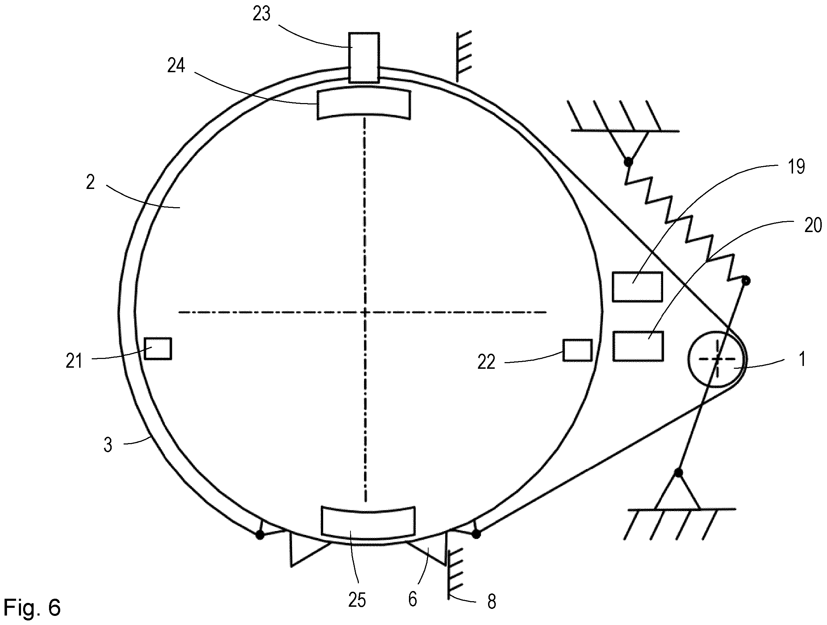

Fig. 6 zeigt in schematischer Draufsicht die Positionen verschiedener Sensoren, soweit entsprechende Sensoren vorhanden sind.

Für das Erkennen, dass das Kettenrad 2 eine jeweilige Endstellung erreicht hat, sind zwei Sensoren als Endanschlagsensor 19 und Endanschlagsensor 20 vorgesehen. Für den Endanschlagsensor 19 ist eine Sensorbetätigung 21, für den Endanschlagsensor 20 ist eine Sensorbetätigung 22 am Kettenrad 2 angeordnet. Je nachdem, welche Sensorbetätigung 21, 22 sich dem jeweiligen Endanschlagsensor 19, 20 annähert, wird die Drehung des Ritzels 1 und damit des Kettenrads 2 unterbrochen.

Die Sensorbetätigungen 21, 22 können mechanisch, optisch, magnetisch oder elektrisch wirken. Zum Beispiel können die Sensorbetätigungen 21, 22 als Kulissen ausgebildet sein, die gegen Schalter oder Taster anlaufen, die die Endanschlagsensoren 19, 20 bilden. Ebenso können die Sensorbetätigungen 21, 22 beispielsweise auch Magnetbetätigungen sein, die die Endanschlagsensoren 19, 20 auslösen.

Das Auslösen der Endanschlagsensoren 19, 20 kann sehr plötzlich und damit hart erfolgen, was als unkomfortabel empfunden werden kann. Daher kann eine so genannte Softstopp-Funktion vorgesehen sein, bei der ein Annähern des Kettenrads 2 und damit des Drehgestells 17 an die jeweilige Endstellung vorzeitig erkannt wird, sodass die Drehgeschwindigkeit des Ritzels 1 und damit des Kettenrads 2 rechtzeitig vor Erreichen der Endstellung reduziert werden kann.

Zu diesem Zweck ist ein Softstopp-Sensor 23 vorgesehen, der mit zwei an dem Kettenrad 2 bzw. dem Drehgestell 17 vorgesehenen Softstopp-Sensorbetätigungen 24, 25 zusammenwirkt. Wenn eine der beiden Softstopp-Sensorbetätigungen 24, 25 (im in Fig. 6 gezeigten Beispiel Softstopp-Sensorbetätigung 24) den Softstopp-Sensor 23 passiert, wird dies als Annäherung des Endanschlags 6 an den Gegenanschlag 8 verstanden, sodass die Drehgeschwindigkeit des Kettenrads 2 reduziert wird, bevor der Endanschlag 6 hart an den Gegenanschlag 8 anschlägt.

Die Endanschläge 6, 7 bzw. Gegenanschläge 8, 9 können ihrerseits auch mit Endanschlagsensoren ausgestattet werden, so dass ein jeweiliges Anschlagen gleichzeitig auch einen Steuerimpuls bzw. ein Steuersignal erzeugt, so dass der das Ritzel 1 antreibende Motor abgeschaltet wird.

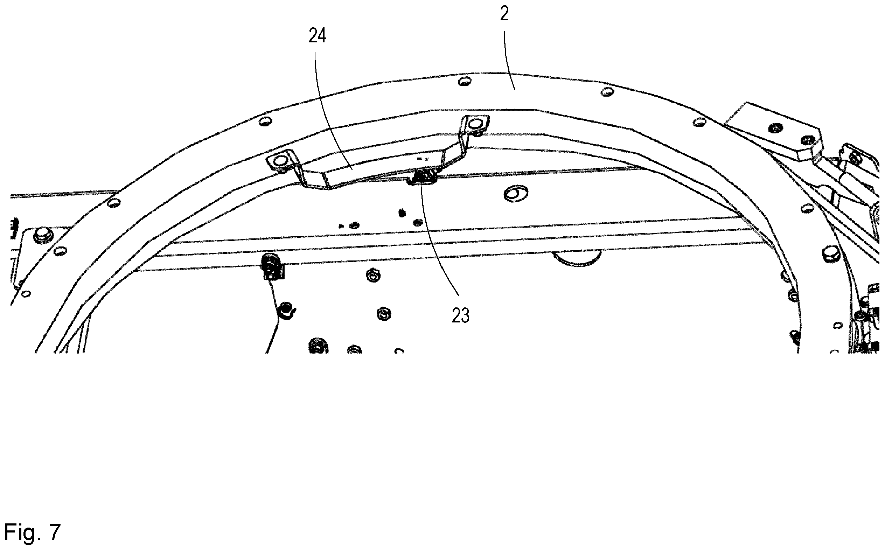

Fig. 7 zeigt ein konkretes Beispiel für die Verwirklichung der Softstopp-Funktion. Dort ist der Softstopp-Sensor 23 als Taster ausgebildet, der bei der Verdrehung des Kettenrads 2 durch eine darüberstreichende Kulisse als Softstopp-Sensorbetätigung 24 ausgelöst wird.

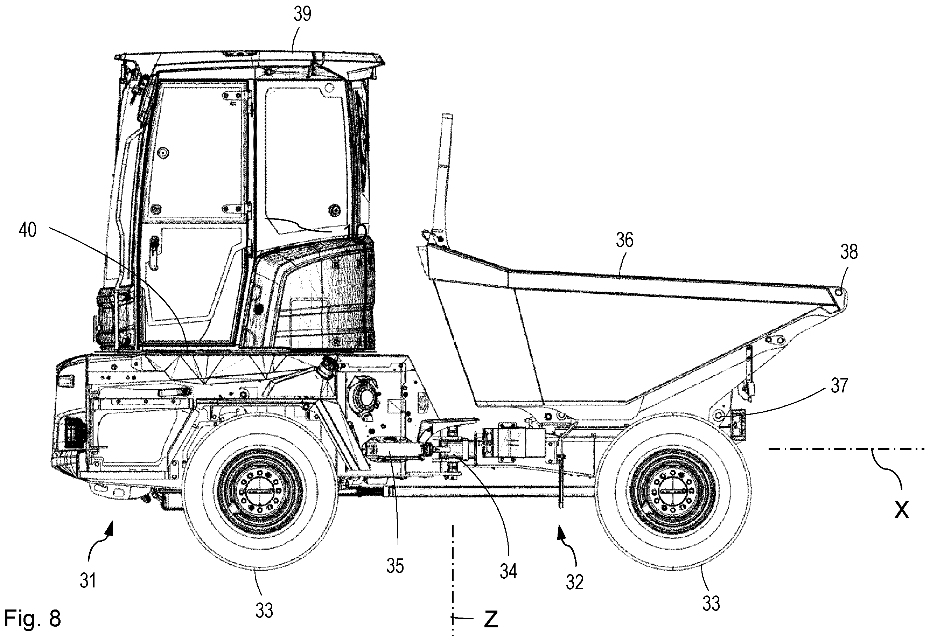

Fig. 8 zeigt in Seitenansicht ein Beispiel für einen als Arbeitsfahrzeug dienenden sogenannten Dumper, bei dem die oben beschriebene Drehvorrichtung zum Drehen der Fahrerkabine (Fahrerkanzel) vorgesehen ist. Als Dumper werden zum Beispiel kleinere knick-gelenkte Muldenkipper bezeichnet.

Das Fahrzeug weist eine Fahreinheit 31 und eine Muldeneinheit 32 auf, die jeweils eine starre Radachse 33 mit Rädern tragen. Zwischen der Fahreinheit 31 und der Muldeneinheit 32 ist ein sogenanntes Knick-Pendel-Gelenk 34 angeordnet. Ein derartiges Knick-Pendel-Gelenk 34 wurde oben bereits beschrieben und dient zum Koppeln der Fahreinheit 31 mit der Muldeneinheit 32 derart, dass die Fahreinheit 31 und die Muldeneinheit 32 sowohl um eine Hochachse Z als auch um eine Längsachse X relativ zueinander bewegbar bzw. verschwenkbar sind.

Die Verschwenkung um die Hochachse Z ermöglicht eine Lenkbewegung dadurch, dass die beiden Radachsen 33 zueinander in einen Winkel gestellt werden können (sogenannte Knick-Bewegung).

Die Beweglichkeit um die Längsachse X wird auch als "Pendeln" bezeichnet und erhöht die Geländegängigkeit des Arbeitsfahrzeugs erheblich.

Die Verschwenkbewegung um die Hochachse Z wird durch eine Lenkvorrichtung bewirkt, die eine hydraulische Kolben-Zylinder-Einheit 35 umfasst. Mithilfe der Kolben-Zylinder-Einheit 35 kann die Winkelstellung zwischen der Fahreinheit 31 und der Muldeneinheit 32 eingestellt werden.

Die Muldeneinheit 32 trägt eine Mulde 36 an ihrer Oberseite. Die Mulde 36 ist durch einen nicht dargestellten hydraulischen Hebemechanismus um eine Schwenkachse 37 verschwenkbar bzw. anhebbar. Dadurch kann die zum Beispiel loses Schüttgut tragende Mulde 36 über eine Ladekante 38 einfach entleert werden.

Auf der Fahreinheit 31 ist ein Fahrerschutzaufbau 39 bzw. eine Fahrerkanzel aufgebaut, die unter anderem einen nicht dargestellten Fahrersitz sowie verschiedene Bedienelemente (Lenkrad, Joystick, Gas- und Bremspedale) umschließt. Der Fahrerschutzaufbau 39 wird unter anderem durch Bügel gebildet, die einen Überrollschutz bieten, wodurch eine ROPS/FOPS-Struktur verwirklicht ist.

Der Fahrerschutzaufbau 39 bzw. die Fahrerkanzel mit dem Fahrersitz sind auf einer als Drehgestell dienenden Drehkonsole 40 befestigt, die auch die weiteren Bedienelemente trägt. Die Drehkonsole 40 ist über ein Gleitlager relativ zu der restlichen Fahreinheit 31 drehbar gelagert. Alternativ zu dem Gleitlager kann die Drehkonsole 40 auch mittels eines Kugellagers oder mithilfe von kleineren Rollen gelagert sein.

Insbesondere sind die Drehkonsole 40 und damit der Fahrerschutzaufbau 39 bzw. die Fahrerkanzel und der Fahrersitz mithilfe der oben beschriebenen Drehvorrichtung um 180° zwischen einer Vorwärtsstellung und einer Rückwärtsstellung verschwenkbar. Dazu kann die Drehkonsole 40 als Drehgestell 17 dienen bzw. mit dem Drehgestell 17 gekoppelt sein.

Die Drehkonsole 40 stellt eine flache Plattform bereit, auf der der Fahrerschutzaufbau 39 bzw. die Fahrerkanzel aufsitzen kann. Dabei ist vorgesehen, dass ein Antrieb, der das Ritzel 1 der Drehvorrichtung und damit über die Kette 3 die Drehkonsole 40 bzw. das Drehgestell 17 drehend antreibt, nicht über die Ebene der Drehkonsole 40 hinausragt. Der Fahrerschutzaufbau 39 kann damit ungehindert verdreht werden.

Insbesondere kann auch ein das Arbeitsfahrzeug antreibender Fahrzeugmotor unterhalb der Drehkonsole 40 eingebaut sein.

Fig. 8 zeigt die Drehkonsole 40 mit der Fahrerkanzel und dem Fahrersitz in Vorwärtsstellung. Ein Fahrer, der auf dem Fahrersitz sitzt, blickt in Fahrtrichtung vorwärts, weg von der Mulde 36. Wenn die Drehkonsole 40 mit dem Fahrersitz um 180° verdreht wird, blickt der Fahrer auf die Mulde 36.

Das in der Fig. 8 nicht gezeigte Ritzel 1 ist zwischen den beiden Radachsen 33 angeordnet. Insbesondere ist das Ritzel 1 zwischen der ebenfalls nicht gezeigten Drehachse 5 des Kettenrads 2 und der Muldeneinheit 32 angeordnet. Fig. 2 zeigt in diesem Zusammenhang im rechten Bildteil einen Abschnitt des Knick-Pendel-Gelenks 34, das zu der in Fig. 2 nicht dargestellten, rechts von dem Knick-Pendel-Gelenkt 34 angeordneten Muldeneinheit 32 führt.

## Patentansprüche

1. Drehvorrichtung zum Drehen einer Fahrerkanzel (39), mit
- einem drehbar gelagerten Drehgestell (17) zum Tragen der Fahrerkanzel (39); und mit
- einem Kettentrieb zum drehenden Antreiben des Drehgestells (17);
wobei
- der Kettentrieb ein Ritzel (1), ein Kettenrad (2) und eine über das Ritzel (2) und das Kettenrad (2) wenigstens teilweise umlaufende Kette (3) aufweist;
- das Kettenrad (2) an dem Drehgestell (17) angeordnet ist;
- das Ritzel (1) und das Kettenrad (2) jeweils eine Drehachse (4, 5) aufweisen; und wobei
- die beiden Drehachsen (4, 5) parallel zueinander verlaufen und relativ zueinander in einer Ebene senkrecht zu den Drehachsen (4, 5) bewegbar sind.

2. Drehvorrichtung nach Anspruch 1, wobei die beiden Drehachsen (4, 5) relativ zueinander derart bewegbar sind, dass ihr Abstand veränderbar ist.

3. Drehvorrichtung nach einem der vorstehenden Ansprüche, wobei
- der Abstand der beiden Drehachsen (4, 5) unter Wirkung einer Federeinrichtung (15) veränderbar ist; und wobei
- die Wirkung der Federeinrichtung (15) derart ist, dass die Federeinrichtung (15) ein Vergrößern des Abstands bewirkt.

4. Drehvorrichtung nach einem der vorstehenden Ansprüche, wobei
- eine der Drehachsen (4, 5) auf einer Konsole (13) gelagert ist;
- die Konsole (13) beweglich an einer Konsolenlagerung (14) gelagert ist; und wobei
- die Federeinrichtung (15) eine Federkraft auf die Konsole (13) bewirkt, derart, dass die Konsole (13) an der Konsolenlagerung (14) bewegt wird und der Abstand der beiden Drehachsen (4, 5) vergrößert wird.

5. Drehvorrichtung nach einem der vorstehenden Ansprüche, wobei das Kettenrad (2) und das Drehgestell (17) eine Einheit bilden.

6. Drehvorrichtung nach einem der vorstehenden Ansprüche, wobei
- die Kette (3) zwei Enden (10, 11) aufweist, die beide an dem Kettenrad (2) befestigt sind; und wobei
- die Kette (3) zwischen ihren beiden Enden (10, 11) über das Ritzel (1) geführt wird;

7. Drehvorrichtung nach einem der vorstehenden Ansprüche, wobei die beiden Enden (10, 11) der Kette (3) an dem Kettenrad (2) befestigt sind und sich das Kettenrad (2) über einen zwischen den beiden Enden (2) liegenden Umfang von wenigstens 180 Grad erstreckt.

8. Drehvorrichtung nach einem der vorstehenden Ansprüche, wobei sich das Kettenrad (2) über einen Umfang von weniger als 360 Grad erstreckt.

9. Drehvorrichtung nach einem der vorstehenden Ansprüche, wobei
- das Kettenrad (2) eine Verzahnung aufweist, die in die Kette (3) eingreift; oder
- das Kettenrad (2) keine Verzahnung aufweist, in die Kette (3) eingreifen könnte, und die Kette (3) lediglich an ihren Enden (10, 11) an dem Kettenrad (2) befestigt ist.

10. Drehvorrichtung nach einem der vorstehenden Ansprüche, wobei zwei Endanschläge (6, 7) vorgesehen sind, zum Definieren von zwei End-Drehstellungen des Drehgestells (17).

11. Drehvorrichtung nach einem der vorstehenden Ansprüche, wobei wenigstens ein Endschalter (19, 20) vorgesehen ist, zum Erkennen einer Drehstellung des Drehgestells (17), wenn das Drehgestell (17) bei einem Drehvorgang eine der beiden End-Drehstellungen erreicht hat.

12. Drehvorrichtung nach einem der vorstehenden Ansprüche, wobei
- wenigstens ein Vorschalt-Endschalter (23) vorgesehen ist, zum Erkennen einer Drehstellung des Drehgestells (17) in einem vordefinierten Bereich, bevor das Drehgestell (17) bei einem Drehvorgang eine der beiden End-Drehstellungen erreicht hat;
- das Ritzel (1) durch einen Antriebsmotor antreibbar ist;
- der Antriebsmotor mit einer Nenndrehzahl und einer gegenüber der Nenndrehzahl reduzierten Näherungsdrehzahl betreibbar ist; und wobei
- der Antriebsmotor mit der reduzierten Näherungsdrehzahl betrieben wird, wenn der Vorschalt-Endschalter (23) die Drehstellung des Drehgestells (17) in dem vordefinierten Bereich erkannt hat.

13. Arbeitsfahrzeug mit einer Drehvorrichtung nach einem der vorstehenden Ansprüche.

14. Arbeitsfahrzeug nach Anspruch 13, mit
- einer Fahreinheit (31), die einen Antrieb und eine Fahrerkanzel (39) aufweist; und mit
- einer Muldeneinheit (32), die eine Mulde (36) zum Aufnehmen einer Last aufweist; wobei
- an der Fahreinheit (31) eine Drehkonsole (40) vorgesehen ist, über der die Fahrerkanzel (39) angeordnet ist und die relativ zu der restlichen Fahreinheit (31) um eine Hochachse zwischen einer Vorwärtsstellung und einer Rückwärtsstellung verschwenkbar ist.

15. Arbeitsfahrzeug nach Anspruch 13 oder 14, mit einem zwischen der Fahreinheit (31) und der Muldeneinheit (32) angeordneten Gelenk (34) zum Koppeln der Fahreinheit (31) mit der Muldeneinheit (32), derart, dass die Fahreinheit (31) und die Muldeneinheit (32) um wenigstens eine Hochachse (Z) des Arbeitsfahrzeugs relativ zueinander bewegbar sind.
